# EUROPÄISCHE PATENTSCHRIFT

(11) **EP 0 709 392 B1**
(45) Veröffentlichungstag und Bekanntmachung des Hinweises auf die Patenterteilung: **16.05.2001**
(21) Anmeldenummer: 95113741.3
(22) Anmeldetag: 01.09.1995
(51) Int. Cl.: C07F 7/18

(54) **Verfahren zur Herstellung von 3-Halogen- bzw. -Pseudohalogen-alkylsilanestern**
Process for the preparation of 3-halogeno- or -pseudohalogeno-alkylsilane esters, respectively
Procédé de préparation d'esters de 3-halogéno- ou -pseudohalogéno-alkylsilanes

(30) Priorität: 25.10.1994 DE 4438031
(43) Veröffentlichungstag der Anmeldung: 01.05.1996
(73) Patentinhaber: Degussa AG, 40474 Düsseldorf (DE)
(72) Erfinder: Kropfgans, Frank, Dr., D-79618 Rheinfelden (DE); Frings, Albert, Dr., D-79618 Rheinfelden (DE); Horn, Michael, Dr., D-79618 Rheinfelden (DE); Kötzsch, Hans-Joachim, Dr., D-79618 Rheinfelden (DE); Monkiewicz, Jaroslaw, Dr., D-79618 Rheinfelden (DE); Seiler, Claus-Dietrich, Dr., D-79618 Rheinfelden (DE); Srebny, Hans-Günther, Dr., D-48249 Dülmen (DE); Standke, Burkhard, Dr., D-79540 Lörrach (DE)

(56) Entgegenhaltungen:
- US-A- 4 658 050
- ZHURNAL OBSCHCHEI KHIMII, Bd. 63, Nr. 10, 1993 Seiten 2257-2266, KOPYLOVA, L.I. ET AL. 'IRIDIUM COMPLEXES IN THE HYDROSILYLATION OF UNSATURATED COMPOUNDS'
- CHEMICAL ABSTRACTS, vol. 119, no. 17, 25.Oktober 1993 Columbus, Ohio, US; abstract no. 180892x, TANAKA, M. ET AL. 'RUTHENIUM COMPLEX-CATALYZED HYDROSILYLATION OF ALLYL CHLORIDE WITH TRIMETHOXYSILANE' Seite 802; & J. MOL. CATAL., Bd. 81, Nr. 2, 1993 Seiten 207-214,

## Beschreibung

Die Erfindung betrifft ein Verfahren zur Herstellung von 3-Halogen- bzw. -Pseudohalogenalkylsilanestern durch Anlagerung von Hydrogensilanestern in Gegenwart von Katalysatoren an die Doppelbindung von ungesättigten Aliphaten, die als reagierende Gruppe das Allylhalogenid- oder -pseudohalogenid-Struktur-Element mit endständiger Doppelbindung enthalten.

Die nach dem erfindungsgemäßen Verfahren hergestellten 3-Halogen- oder-Pseudohalogenalkylsilanester besitzen die in der allgemeinen Formel I wiedergegebene Struktur: 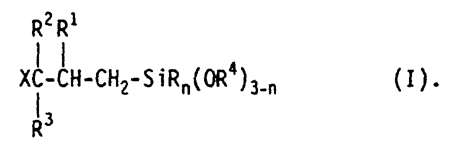
- R: bedeutet darin eine Alkyl-, eine verzweigte Alkyl- oder eine Cycloalkylgruppe mit 1 bis 18 Kohlenstoffatomen, gegebenenfalls halogeniert;
- R¹: bedeutet R oder Wasserstoff;
- R²: bedeutet R, Wasserstoff, einen Arylsubstituenten oder Halogen;
- R³: bedeutet einen gleichen oder verschiedenen Rest R²;
- R⁴: bedeutet einen Alkylrest, der gegebenenfalls verzweigt ist und 1 bis 10 Kohlenstoffatome enthält, gegebenenfalls aber auch aliphatische Ether-Gruppierungen enthalten kann;
- X: bedeutet einen Fluorid-, Chlorid-, Bromid-, Jodid-, Cyanid-, Isocyanat-, Isothiocyanat- oder Azido-Rest;
- n: = 0, 1 oder 2.

Vor allem das 3-Chlorpropyltrialkoxysilan, das Si-Methyl-3-Chlorpropyldialkoxysilan und das Si.Si-Dimethyl-3-Chlorpropylalkoxysilan dienen als Silanhaftvermittler, beispielsweise für Glasfasern, in der Gießerei-Industrie und bei Füllstoffen für Polymere. Insbesondere sind die 3-Halogen- oder -Pseudohalogenalkylsilanester der allgemeinen Formel I wichtige Schlüsselprodukte für die Herstellung beispielsweise von verschiedenen mercapto-, amino-, methacryl- und acryloxy-funktionellen Organosilanen, die inzwischen zu einem eigenen Industriezweig herangewachsen sind.

Es wurde deshalb schon auf verschiedenen Wegen versucht, solche Produkte herzustellen: Die industrielle Produktion geschieht zur Zeit ausschließlich in zweistufigen Verfahrensweisen, indem Allylchlorid mit Trichlorsilan bzw. Methyldichlorsilan, in der Regel in Gegenwart von auf Platin basierenden Katalysatoren, hydrosilyliert wird und das in Ausbeuten zwischen 50 und 83 % dabei erhaltene jeweilige Chlorpropylchlorsilan anschließend verestert wird.

Diese zur Zeit praktizierten Produktionsverfahren sind sehr stoff- und anlagenaufwendig, müssen aber trotz ihrer erheblichen Nachteile mangels besserer Alternativen angewandt werden, weil die Produkte dringend benötigt werden.

Es wurde deshalb auch schon vorgeschlagen, das Allylchlorid mit Trialkoxysilanen zu hydrosilylieren. Bei diesem Reaktionsweg unter Benutzung verschiedener Platin-Katalysatoren lassen sich Produktausbeuten zwischen ca. 20 und 45 % realisieren. Die Reproduzierbarkeit einzelner Ausbeuteangaben bis ca. 70 % ist umstritten. Belyakova und Mitarbeiter,
Zh. Obshch. Khim. 44 (106) 1974, No. 11, 2439-2442, berichten über die nähere Untersuchung dieses Reaktionsweges unter Platin-Katalyse, beschreiben die auftretenden Nebenreaktionen und bestätigen die zwischen ca. 20 und 45 % liegenden Produktausbeuten. In Gegenwart von Rhodium-Katalysatoren gemäß den US-Patenten 3.296.291 und 3.564.266 werden ebenfalls nur weniger als 40 % an Produktausbeuten erzielt, daneben treten ebenfalls erhebliche Nebenreaktionen auf. In Gegenwart hoher Katalysator-Konzentrationen von speziellen dimeren Iridium-Halogenid-Dien-Komplexen wurden gemäß US-Patent 4.658.050 immerhin gaschromatographisch ermittelte Ausbeutezahlen von 75 % erreicht, es ist aber präparativ nur eine Produktausbeute von 55-60 % isolierbar, und die von Belyakova et al. beschriebenen Nebenprodukte treten auch hierbei in großem Umfang auf. Ein ganz besonderer zusätzlicher Nachteil ist der erforderliche Einsatz so kostspieliger Edelmetall-Komplexe in hoher Konzentration, was neben dem Kostenfaktor auch zu untragbaren Verunreinigungs- und Abfallproblemen führt.

Es bestand daher das Problem, die Produkte der allgemeinen Formel I in hohen Ausbeuten auf einfachem Wege zu angemessenen Kosten herzustellen.

Überraschend wurde nun gefunden, daß die geschilderten Schwierigkeiten weitgehend vermieden werden und die Zielprodukte in Ausbeuten bis zu 89 % entstehen, wenn man bei der Herstellung der Produkte der allgemeinen Formel I durch die katalysierte Hydrosilylierung von ungesättigten aliphatischen Verbindungen, die als reagierende Gruppe das Allylhalogenid- oder - pseudohalogenid-Struktur-Element mit einer endständigen Doppelbindung enthalten, der in der allgemeinen Formel II wiedergegebenen Struktur 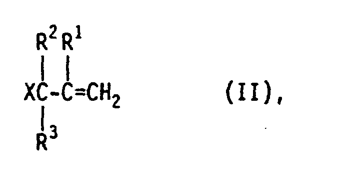 in der X, R¹, R² und R³ die obengenannte Bedeutung besitzen, mit Hydrogensilanestern der in der allgemeinen Formel III wiedergegebenen Struktur

HSiRₙ(OR⁴)₃₋ₙ (III),

in der R, R⁴ und n die obengenannte Bedeutung besitzen, in Gegenwart von Elementen und/oder Verbindungen aus der VIII. Nebengruppe des periodischen Systems mit Hilfe der Reaktionskomponente der allgemeinen Formel II allein oder im Gemisch, stets im Überschuß von 0,01 bis 100 Mol-% II, vorzugsweise von 0,1 bis 10 Mol-%, mit der Reaktionskomponente der allge. meinen Formel III, gegebenenfalls in 5 bis 95 Gew.-%iger Lösung in inerten Lösemitteln, z.B. Kohlenwasserstoffen und/oder dem Zielprodukt der allgemeinen Formel I, durch mindestens 20minütiges Rühren eine zehntel- bis zehntausendstel-normale Lösung oder Suspension von elementarem Iridium und/oder von Verbindungen des Iridiums herstellt, und damit als Katalysator mit einer Katalysator-Konzentration von 10⁻⁵ bis 10⁻³ Mol-%, bezogen auf das eingesetzte Hydrogensilan, die Hydrosilylierung in an sich bekannter Weise durchführt.

Beispielsweise werden im Chargenverfahren die Reaktionskomponenten der allgemeinen Formel III vorgelegt, auf z. B. 70 °C vorgewärmt, mit der erfindungsgemäß hergestellten Katalysatorlösung dotiert und schließlich die Reaktionskomponenten der allgemeinen Formel II unter Rühren und Kontrolle der exothermen Reaktion eindosiert. Die anzuwendende Reaktionszeit liegt in der Regel bei 30 bis 180 Minuten.

Im Chargenverfahren ist aber auch eine Reaktionsweise vorteilhaft, bei der der Katalysator im Gemisch der Reaktionskomponenten II und III oder mit überschüssigem II in situ vorgebildet wird, dann im letzteren Falle die Komponente III hinzugefügt wird und schließlich die Reaktion durch Heizen auf die Aktivierungstemperatur unter Kontrolle der exothermen Wärmeentwicklung ausgeführt wird.

Die optimale Reaktionstemperatur liegt bei 70 bis 130 °C. Gegebenenfalls ist auch die Anwendung von erhöhtem Druck dienlich; vorzugsweise bis zu 40 bar.

Im Falle der kontinuierlichen Reaktionsführung ist es von Vorteil, die beiden Reaktionskomponenten der allgemeinen Formeln II und III sowie die Katalysator-Zubereitung vorzumischen, gegebenenfalls in Gegenwart von 20 bis 75 Gew.-%, bezogen auf die Summe der Reaktionskomponenten, von Kohlenwasserstoffen und/oder des Zielprodukts der allgemeinen Formel I als Medium, und mit Verweilzeiten von ca. 10 bis 50 Minuten flüssig durch eir auf ca. 70 bis 120 °C thermostatisiertes Reaktionsrohr zu leiten. Sowohl bei der Chargen- als auch bei der kontinuierlichen Reaktionsweise werden nach dem erfindungsgemäßen Verfahren Ausbeuten bis zu 89 % an Produkten der allgemeinen Formel I erhalten.

Die so nach dem erfindungsgemäßen Verfahren hergestellten rohen Produkte der allgemeinen Formel I enthalten vergleichsweise nur wenig Nebenprodukte, so daß gegebenenfalls auf eine Nachveresterung verzichtet werden kann, weil die Aufarbeitung mit Hilfe destillativer Methoden genügend reine Produkte liefert, insbesondere für das große Anwendungsgebiet der Aminosilan-Herstellung.

Sollen jedoch besonders reine und neutrale Produkte der allgemeinen Formel I isoliert werden, so empfiehlt sich eine einfache Nachveresterung der herstellungsbedingt noch restliche Acidität enthaltenden Rohprodukte nach den an sich bekannten allgemeinen Aufarbeitungsmethoden für Siliciumester, beispielsweise durch Zugabe von etwas Alkohol unter Abfangen der Acidität und abschließende Filtration.

Gemäß dem erfindungsgemäßen Verfahren mit Vorteil gegenüber bisher bekannten Verfahrensweisen herstellbare Produkte der allgemeinen Formel I sind insbesondere die Verbindungen
3-Chlorpropyltrimethoxy- bzw. -triethoxysilan,
3-Chlorpropylmethyldimethoxy- bzw. -diethoxysilan,
3-Chlorpropyldimethylmethoxy- bzw. -ethoxysilan,
3-Chlorpropyltris- (2-methoxy)ethoxysilan,
3-Chlorpropyltris- (2-methoxyethoxyethoxy)ethoxysilan,
3-Chlorpropyldimethyl-sekundärbutoxysilan,
3-Chlor-2-methylpropyltrimethoxysilan,
2-Chlormethylbutyltrimethoxysilan,
3-Chlor-2-chlormethylpropylmethyldiethoxysilan,
3-Chlor-2-chlormethylbutyltriethoxysilan,
3-Chlorpentyldimethyl(2-ethyl)hexyloxysilan,
3-Fluorpropyltriethoxysilan,
3-Brompropyltriethoxysilan,
3-Brom-2-methylbutylmethyldimethoxysilan,
3-Jodpropyltriethoxysilan,
3-Jod-2-methylpropyltriethoxysilan,
3-Cyanopropyltriethoxysilan,
3-Isocyanatopropyltriethoxysilan,
3-Azidopropyltriethoxysilan,
3.4-Dibrom-2.3-dimethylbutylmethyldimethoxysilan,
3-Bromhexyldimethylethoxysilan,
3-Chlorheptyltrimethoxysilan,
3-Azidoheptyldimethylmethoxysilan,
3.3-Difluorpropyltriethoxysilan,
3.3-Dichlorpropyltrimethoxysilan,
3.3-Dichlor-2-methylpropyltrimethoxysilan,
3.3.3-Trifluorpropyltriethoxysilan,
3.3.3-Trichlorpropyltrimethoxysilan,
3.3.3-Trifluor-2-trifluormethylpropyltriethoxysilan,
3.3.4.4.4-Pentafluorbutyltriethoxysilan.

Für die Durchführung der erfindungsgemäßen Verfahrens geeignete Ausgangsstoffe mit der Struktur der allgemeinen Formel II sind insbesondere folgende Verbindungen:
Allylfluorid,
Allylchlorid,
Allylbromid,
Allyljodid,
Allylazid,
Allylcyanid,
Allylisocyanat,
Methallylfluorid,
Methallylchlorid,
Methallylbromid,
Methallyljodid,
2-Chlormethylbuten-1,
3-Chlor-2-methylbuten-1,
3-Brom-2-methylbuten-1,
3.4-Dichlorbuten-1,
3.4-Dibrombuten-1,
3-Fluor-2-fluormethylpropen-1,
3-Chlor-2-chlormethylpropen-1,
3-Chlor-2-chlormethylbuten-1,
3-Chlorpenten-1,
3-Chlor-2-methylpenten-1,
3.3-Difluorpenten-1,
3-Chlorhexen-1,
3-Bromhexen-1,
3-Chlorhepten-1,
3-Azidohepten-1,
3.4-Dibrom-2.3-dimethylbuten-1,
4-Brom-3-chlor-3.4.4-trifluorbuten-1,
3.3-Difluorpropen-1,
3.3-Dichlorpropen-1,
3.3-Dibrompropen-1,
3.3-Difluor-2-methylpropen-1,
3.3-Dichlor-2-methylpropen-1,
3.3-Dibrom-2-methylpropen-1,
3.3-Dichlor-2-methylbuten-1,
3.4-Dichlor-2-methylbuten-1,
3.4-Dibrombuten-1,
3.4-Dibrom-2-methylbuten-1,
3.3.3-Trifluorpropen-1,
3.3.3-Trichlorpropen-1,
3-Brom-3.3-difluorpropen-1,
3-Chlor-2-trifluormethylpropen-1,
3.3.3-Trifluor-2-trifluormethylpropen-1,
3.3.4.4.4-Pentafluorbuten-1,
3.4-Dichlor-3.4.4-trifluorbuten-1,
4-Brom-3-chlor-3.4.4-trifluorbuten-1.

Mit Hilfe dieser Ausgangsstoffe der allgemeinen Formel II allein oder im Gemisch mit den anderen Komponenten der erfindungsgemäßen Hydrosilylierungsreaktion, aber stets mit überschüssiger Komponente der Formel II, werden erfindungsgemäß Iridium und/oder dessen Verbindungen behandelt und dadurch die katalytisch wirksame Lösung oder Suspension hergestellt. Als Iridium-Komponenten eignen sich beispielsweise Iridium-Mohr (Iridiumblack), die besonders bevorzugten Chloride, wie Iridium(III)chlorid, Iridium(III)chloridhydrat, Iridium(IV)chloridhydrat, Hexachloroiridiumsäure-6-hydrat; ebenso geeignet sind aber z. B. auch das Iridium(IV)oxidhydrat, das Kaliumhexachloroiridat(IV), das Kaliumhexachloroiridat (III)-3-hydrat, das Tris(acetylacetonato)iridium(III) und das Iridium(III)-oxolat sowie Komplexverbindungen des Iridiums wie z. B. cis-Dichlorobis(ethylendiamin)iridium(III)chlorid, Pentaamminchloroiridium(III)chlorid, Chlorotris(norbornadien)iridium(I), Chloro-(1.5-cyclooctadien)iridium(I)dimer, Chlorocarbonylbis(cycloocten)iridium(I)dimer, Bis-(tricarbonylchloroiridium), Octachlorooctacarbonyltetrairidium(I, II), Dodecacarbonyltetrairidium, 1.5-Cyclooctadienbis(methyldiphenylphosphin)iridiumhexafluorophosphat, Bis(triphenylphosphin)iridiumcarbonylchlorid, Hydridochlorotris(triphenylphosphin)iridium(III), Dihydridochlorotris(triphenylphosphin)iridium(III), Carbonylhydridotris(triphenylphosphin)iridium.

Die Hydrogensilanester der allgemeinen Formel III, die als hydrosilylierende Reaktionskomponenten eingesetzt werden, sind beispielsweise Triethoxysilan, Trimethoxysilan, Triisobutoxysilan, Hydrogenmethyldiethoxysilan oder -dimethoxysilan, Hydrogencyclohexyldiisopropoxysilan, Hydrogendimethylethoxy-, -octyloxy- oder -2-butoxyethoxysilan.

Die Erfindung wird nachstehend anhand der Beispiele erläutert.

### Beispiel 1

In einem mittels Thermostat beheizbaren 4-L-Mehrhalskolben mit Rührer, Innenthermometer und Rückflußkühler (N₂-überlagert) wurden bei Raumtemperatur 12 mg (4·10⁻⁵ Mol) Iridium(III)chloridhydrat innerhalb von 40 Minuten in ein flüssiges Gemisch eingerührt, bestehend aus 625 g (2,6 Mol) 3-Chlorpropyltriethoxysilan als Reaktionsmedium, 625 g (8,17 Mol) Allylchlorid und 1250 g (7,6 Mol) Triethoxysilan als Reaktionskomponenten. Beim anschließenden Erwärmen setzte bei ca. 70 °C eine schwach exotherme Reaktion ein, während der die Reaktorinnentemperatur innerhalb von ca. 30 Minuten unter ständig schwächer werdendem Rückfluß bis auf 104 °C anstieg und innerhalb weiterer 15 Minuten wieder auf 94 °C zurückging. Für die Nachreaktionszeit von ca. 30 Minuten wurde der Ansatz mit Hilfe des Thermostaten bei 90 °C gehalten.

Zur Aufarbeitung wurde zunächst der geringe Allylchlorid-Überschuß destillativ abgezogen, dann die durch die Nebenreaktion entstandene Chlorid-Acidität von insgesamt 0,92 Mol mit einem äquimolaren Gemisch aus Ethanol und Triethylamin neutralisiert, abfiltriert und schließlich im Vakuum über eine Kolonne reindestilliert.

Es wurden insgesamt 2200 g 3-Chlorpropyltriethoxysilan erhalten. Nach Abzug der eingesetzten Menge von 625 g beträgt die Ausbeute 1575 g. Das sind 86 % Ausbeute, bezogen auf das eingesetzte Triethoxysilan. Als Nebenprodukte wurden ca. 40 g Propyltriethoxysilan und ca. 140 g Tetraethoxysilan isoliert.

### Beispiel 2

Die Lösung von 14 mg Dihydrogenhexachloroiridat in 2 ml Isopropanol wurde in eine Lösung von 610 g (7,94 Mol) Allylchlorid in 625 g (2,6 Mol) 3-Chlorpropyltriethoxysilan eingemischt und das Gemisch eine Stunde bei Raumtemperatur unter Inertgas gerührt. Dann wurde das Reaktionsgemisch zusammen mit 1250 g (7,6 Mol) Triethoxysilan auf einen mit Doppelmantel und N₂-überlagertem Rückflußkühler ausgestatteten, als kommunizierendes Rohr ausgebildeten Rohrreaktor kontinuierlich über eine Mischdüse in flüssiger Phase dosiert, mit einer Verweilzeit von 35 bis 40 Minuten bei 79 °C. An der Zuführungsstelle traten Aufsieden und kräftiger Rückfluß ein. Das am kommunizierenden Überlauf flüssig austretende Rohprodukt siedete nicht mehr. Die Aufarbeitung erfolgte analog Beispiel 1.
Es wurden 1630 g 3-Chlorpropyltriethoxysilan erhalten. Dies entspricht einer Ausbeute von 89 %, bezogen auf das eingesetzte Triethoxysilan.

### Beispiel 3

In einem Minilabordruckreaktor vom Typ TINYCLAVE (BUECHI) von 25 ml Rauminhalt wurden 4 g p-Xylol, 4,2 g (0,055 Mol) Allylchlorid und 8,2 g (0,05 Mol) Triethoxysilan mit 0,16 mg (10⁻³ Mol %) Chloro-(1.5-cyclooctadien)iridium(I)dimer eine Stunde lang bei Raumtemperatur intensiv vermischt. Danach wurde das Reaktionsgemisch in einem Thermostaten 2 Stunden lang auf 80 °C erwärmt. Die gaschromatographische Analyse ergab eine Produktausbeute von 83 % an 3-Chlorpropyltriethoxysilan.

### Beispiel 4 (Vergleichsbeispiel)

Analog Beispiel 3 wurde eine homogene Reaktionslösung aus 4 g p-Xylol, 3,8 g (0,05 Mol) Allylchlorid (anstelle von 4,2 g entsprechend 0,055 Mol), 8,2 g (0,05 Mol) Triethoxysilan und 0,16 mg (10⁻³ Mol %) Chlo ro-(1,5-cyclooctadien)iridium(I)dimer ohne längere Misch- bzw. Lagerzeit zur Reaktion gebracht. Die gaschromatographische Analyse ergab eine Produktausbeute von lediglich 61 % an 3-Chlorpropyltriethoxysilan.

### Beispiel 5

Analog Beispiel 1 wurde mit 16 mg Chlorocarbonylbis(cycloocten)iridium(I)dimer ein Reaktionsgemisch, bestehend aus 585 g (2,6 Mol) 3-Chlorisobutylmethyldiethoxysilan, 739 g (8,17 Mol) Methallylchlorid und 1022 g (7,6 Mol) Methyldiethoxysilan, umgesetzt. Die Reaktorinnentemperatur stieg dabei innerhalb von ca. 40 Minuten von 70 °C auf 112 °C an. Die Nachreaktion benötigte ca. 1 Stunde. Es entstand eine Chlorid-Acidität von insgesamt 1,04 Mol. Es wurden insgesamt 1986 g 3-Chlorisobutylmethyldiethoxysilan erhalten. Nach Abzug der eingesetzten Menge von 585 g beträgt die Ausbeute 1400 g. Das sind 82 % Ausbeute, bezogen auf das eingesetzte Methyldiethoxysilan. Als Nebenprodukte wurden Isobutylmethyldiethoxysilan und Methyltriethoxysilan gefunden.

### Beispiel 6

Analog Beispiel 1 wurde ein Reaktionsgemisch, bestehend aus 700 g p-Xylol, 803 g (8,1 Mol) Allylsenföl und 936 g (7,66 Mol) Trimethoxysilan, mit einer Lösung von 22 mg Dihydrogenhexachloroiridat in 3 ml Isopropanol 90 Minuten lang bei Raumtemperatur gerührt und bei 90 bis 114 °C in 160 Minuten zur Reaktion gebracht. Die destillative Aufarbeitung lieferte 1539 g (91 % Ausbeute, bezogen auf das eingesetzte Trimethoxysilan) an 3-Isothiocyanatopropyltrimethoxysilan.

### Beispiel 7

Analog Beispiel 3 wurde ein Gemisch von 3 g p-Xylol, 5,3 g (0,055 Mol) 3.3.3-Trifluorpropen-1 und 9,4 g (0,5 Mol) Cyclopentyldiethoxysilan in Gegenwart von 0,1 mg Iridium(III)chloridhydrat nach 70 Minuten Mischungszeit in 180 Minuten bei 83 °C umgesetzt. Die gaschromatographische Analyse ergab eine Produktausbeute von 77 % an 3.3.3-Trifluorpropylcyclopentyldiethoxysilan.

### Beispiel 8

Analog Beispiel 1 wurde ein Reaktionsgemisch, bestehend aus 140 g p-Xylol, 242 g (2 Mol) Allylbromid und 335 g (1,9 Mol) Dimethyl(2-butoxyethoxy)silan in Gegenwart von 2 mg Iridium(III)-chloridhydrat umgesetzt. Die destillative Aufarbeitung lieferte 432 g 3-Brompropyldimethyl(2-butoxyethoxy)silan. Dies entspricht einer präparativen Ausbeute von 77 %, bezogen auf den eingesetzten Hydrogendimethylsilanester.

### Beispiel 9

Analog Beispiel 6 wurde ein Reaktionsgemisch, bestehend aus 640 g p-Xylol, 680 g (8,17 Mol) Allylisocyanat und 1250 g (7,6 Mol) Triethoxysilan, innerhalb von 150 Minuten bei 76 bis 92 °C umgesetzt. Die destillative Aufarbeitung lieferte 1350 g 3-Isocyanatopropyltriethoxysilan neben dem Trimer.

### Beispiel 10

Analog Beispiel 1 wurde ein Reaktionsgemisch, bestehend aus 90 g p-Xylol, 144,6 g (1,04 Mol) 3.4-Dichlor-2-methylbuten-1 und 259 g (1 Mol) Ethyldimethoxysilan, in Gegenwart von 1 mg Iridium(III)chloridhydrat umgesetzt. Die destillative Aufarbeitung lieferte 197 g 3.4-Dichlor-2-methylbutylethyldimethoxysilan. Dies entspricht einer präparativen Ausbeute von 76 %, bezogen auf den eingesetzten Hydrogenethylsilandimethylester.

## Patentansprüche

1. Verfahren zur Herstellung von Produkten der allgemeinen Formel I 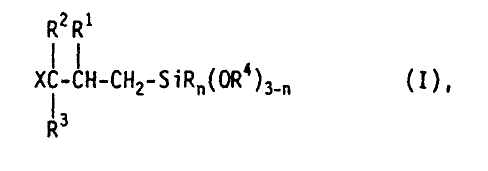 in der
R eine Alkyl-, eine verzweigte Alkyl- oder eine Cycloalkylgruppe mit 1 bis 18 Kohlenstoffatomen, gegebenenfalls halogeniert, bedeutet;
R¹ R oder Wasserstoff bedeutet;
R² R, Wasserstoff, einen Arylsubstituenten oder Hallogen bedeutet;
R³ einen gleichen oder verschiedenen Rest R2 bedeutet;
R⁴ einen Alkylrest bedeutet, der gegebenenfalls verzweigt ist und 1 bis 10 Kohlenstoffatome enthält, gegebenenfalls aber auch aliphatische Ether-gruppierungen enthalten kann;
X einen Fluorid-, Chlorid-, Bromid-, Jodid-, Cyanid-, Isocyanat-, Isothiocyanat- oder Azido-Rest bedeutet;
und
n gleich 0, 1 oder 2 ist;
durch katalysierte Umsetzung
von ungesättigten aliphatischen Verbindungen, die als reagierende Gruppe das Allylhalogenid- oder -pseudohalogenid-Strukturelement der allgemeinen Formel II mit einer endständigen Doppelbindung enthalten 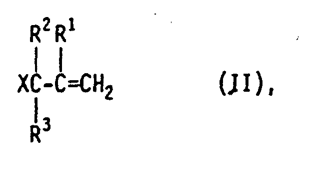
in der X, R¹, R² und R³ die obengenannte Bedeutung besitzen, mit Hydrogensilanestern der allgemeinen Formel III
HSiRₙ(OR⁴)₃₋ₙ (III),
in der R, R⁴ und n die obengenannte Bedeutung besitzen,
in Gegenwart von Elementen und/oder Verbindungen aus der VIII. Nebengruppe des periodischen Systems, dadurch gekennzeichnet, daß man mit Hilfe der Reaktionskomponente der allgemeinen Formel II allein oder im Gemisch, stets im Überschuß von 0,01 - 100 Mol-% II, vorzugsweise von 0,1 - 10 Mol-%, mit der Reaktionskomponente der allgemeinen Formel III und gegebenenfalls in 5- 95 Gew.-%iger Lösung in inerten Lösemitteln, z. B. Kohlenwasserstoffen und/oder dem Zielprodukt der allgemeinen Formel I, durch mindestens 20minütiges Rühren eine zehntel- bis zehntausendstel-normale Lösung oder Suspension von elementarem Iridium und/oder von Verbindungen des Iridiums herstellt und damit als Katalysator mit einer Katalysator-Konzentration von 10⁻⁵ - 10⁻³ Mol-%, bezogen auf das eingesetzte Hydrogensilan, die Hydrosilylierung in an sich bekannter Weise durchführt.

2. Verfahren nach Anspruch 1,
dadurch gekennzeichnet,
daß man die Reaktion bei Temperaturen von 70 °C bis 130 °C ausführt.

3. Verfahren nach Anspruch 1 oder 2,
dadurch gekennzeichnet,
daß man die Reaktion bei erhöhtem Druck, vorzugsweise bis 40 bar, ausführt.

4. Verfahren nach einem der Ansprüche 1 bis 3,
dadurch gekennzeichnet,
daß man die Reaktion kontinuierlich ausführt.

5. Verfahren nach einem der Ansprüche 1 bis 4,
dadurch gekennzeichnet,
daß man gegebenenfalls in der Reaktion als Nebenprodukte gebildete Halogensilan- oder Pseudohalogensilanverbindungen in an sich bekannter Weise verestert.

## Claims

1. A process for the production of products of the general formula I 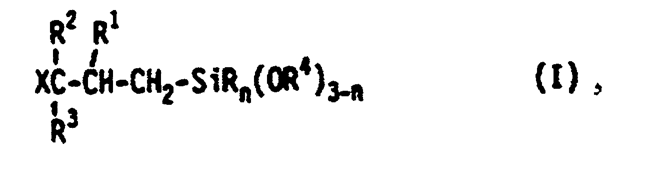 in which
R is an alkyl, a branched alkyl or a cycloalkyl group having 1 to 18 carbon atoms, which may be halogenated;
R¹ is R or hydrogen;
R² is R, hydrogen, an aryl substituent or halogen;
R³ is an identical or different radical R²;
R⁴ is an alkyl radical which may be branched and contains 1 to 10 carbon atoms but may also, if desired, contain aliphatic ether groups;
X is a fluoride, chloride, bromide, iodide, cyanide, isocyanate, isothiocyanate or azido radical; and
n is 0, 1 or 2;
by catalysed reaction of unsaturated aliphatic compounds which contain as reacting group the allyl halide or pseudohalide structural element of the general formula II having a terminal double bond 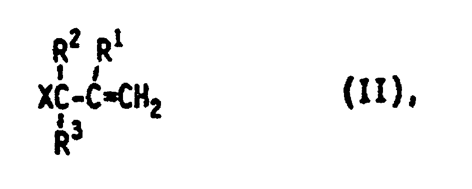 in which X, R¹, R² and R³ are as defined above, with hydrosilane esters of the general formula III
HSiRₙ(OR⁴)₃₋ₙ (III),
in which R, R⁴ and n are as defined above, in the presence of elements and/or compounds from subgroup VIII of the Periodic Table, characterized in that, with the aid of the reaction component of the general formula II, alone or in a mixture, always in an excess of 0.01 - 100 mol% of II, preferably 0.1 - 10 mol%, with the reaction component of the general formula III and, if desired, in a 5 - 95% strength by weight solution in inert solvents, for example hydrocarbons and/or the target product of the general formula I, a from tenth to ten-thousandth normal solution or suspension of elemental iridium and/or of compounds of iridium is prepared by stirring for at least 20 minutes, and with this as catalyst with a catalyst concentration of from 10⁻⁵ - 10⁻³ mol%, based on the hydrosilane employed, the hydrosilylation is carried out in a manner known per se.

2. A process according to claim 1, characterized in that the reaction is carried out at temperatures of from 70°C to 130°C.

3. A process according to claim 1 or 2, characterized in that the reaction is carried out at elevated pressure, preferably up to 40 bar.

4. A process according to any one of claims 1 to 3, characterized in that the reaction is carried out continuously.

5. A process according to any one of claims 1 to 4, characterized in that any halosilane or pseudohalosilane compounds formed in the reaction as by-products are esterified in a manner known per se.

## Revendications

1. Procédé de préparation de produits de formule générale I, 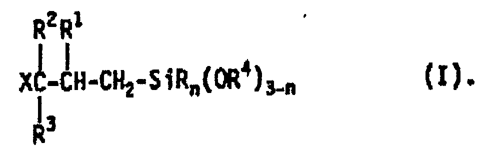 dans laquelle,
R signifie un groupe alkyle, alkyle ramifié ou cycloalkyle ayant de 1 à 18 atomes de carbone, éventuellement halogéné ;
R¹ signifie R ou hydrogène ;
R² signifie R, de l'hydrogène, un substituant aryle ou un halogène ;
R³ signifie un reste R² identique ou différent,
R⁴ signifie un radical alkyle, qui est éventuellement ramifié et qui contient de 1 à 10 atomes de carbone et qui peut contenir le cas échéant cependant aussi des groupements éther aliphatique ;
X signifie un reste fluorure, chlorure, bromure, iodure, cyanure, isocyanate, isothiocyanate ou azido, et
n = 0, 1 ou 2,
par réaction catalytique de composés aliphatiques non saturés qui renferment comme groupe réactif l'élément structurel halogénure ou pseudohalogénure d'allyle de formule générale II avec une double liaison terminale, 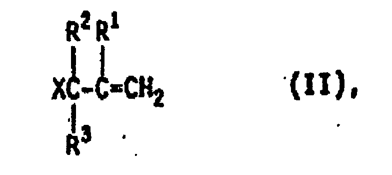 dans laquelle X, R¹, R² et R³ possèdent la signification citée ci-dessus, avec des esters d'hydrogénosilane qui possèdent la structure reproduite dans la formule générale III,
HSiRₙ(OR⁴)₃₋ₙ (III),
dans laquelle, R, R⁴ et n possèdent la signification mentionnée ci-dessus,
en présence d'éléments et/ou de composés provenant du VIIIème sous-groupe du système périodique,
caractérisé en ce qu'
à l'aide des composants réactionnels de formule générale II seul ou en mélange, toujours en excès de 0,01 à 100 % molaire de II, de préférence de 0,1-10 % molaire, avec le composant réactionnel de formule générale III et le cas échéant en solution à 5-95 % en poids dans un solvant inerte par exemple des hydrocarbures et/ou le produit cible de formule générale I, on prépare par agitation d'au moins 20 minutes une solution ou une suspension au dixième à dix millième normale, d'iridium élémentaire et/ou de composés d'iridium, et ainsi on effectue d'une manière connue en soi l'hydrosilylation avec la solution comme catalyseur à une concentration en catalyseur allant de 10⁻⁵ à 10⁻³ % molaire, rapporté à l'hydrogénosilane mis en oeuvre.

2. Procédé selon la revendication 1,
caractérisé en ce qu'
on effectue la réaction à des températures allant de 70°C à 130°C.

3. Procédé selon la revendication 1 ou 2,
caractérisé en ce qu'
on effectue la réaction à pression accrue, de préférence jusqu'à 40 bars.

4. Procédé selon l'une quelconque des revendications 1 à 3,
caractérisé en ce qu'
on effectue la réaction en continu.

5. Procédé selon l'une quelconque des revendications 1 à 4,
caractérisé en ce qu'
on estérifie le cas échéant les composés halogénosilane ou pseudohalogénosilane d'une manière connue en soi.
